# EUROPÄISCHE PATENTSCHRIFT

(11) **EP 2 731 859 B1**
(45) Veröffentlichungstag und Bekanntmachung des Hinweises auf die Patenterteilung: **08.06.2016**
(21) Anmeldenummer: 12750695.4
(22) Anmeldetag: 09.07.2012
(51) Int. Cl.: B63B 3/08, B63B 35/44, B63B 39/03, F24J 2/52

(54) **SCHWIMMPLATTFORM**
FLOATING PLATFORM
PLATE-FORME FLOTTANTE

(30) Priorität: 13.07.2011 AT 10282011
(43) Veröffentlichungstag der Anmeldung: 21.05.2014
(73) Patentinhaber: Technische Universität Wien, 1040 Wien (AT)
(72) Erfinder: HAIDER, Markus, 1130 Wien (AT); RAMMERSTORFER, Franz, 3400 Klosterneuburg (AT); BÖHM, Helmut, 4020 Linz (AT); DIENDORFER, Christian, 1090 Wien (AT); TOTH, Florian, 1060 Wien (AT)
(74) Vertreter: Ellmeyer, Wolfgang
(86) Internationale Anmeldenummer: PCT/AT2012/050096
(87) Internationale Veröffentlichungsnummer: WO 2013/006881

(56) Entgegenhaltungen:
- EP-A1- 1 925 548
- WO-A2-2009/131826
- DE-B- 1 267 129
- US-A- 3 673 975
- US-A- 4 988 317
- US-A1- 2009 133 732

## Beschreibung

Die Erfindung betrifft eine Schwimmplattform, insbesondere für Anlagen zur Gewinnung von Solarenergie.

Die Bedeutung der so genannten alternativen Energiegewinnung, insbesondere von Solarenergie, ist stetig im Steigen begriffen. Aufgrund des relativ hohen Platzbedarfs von Solarenergiekraftwerken ist man bestrebt, selbige auf Wasserflächen, vor allem auf die Ozeane zu verlagern ("Off-Shore-Solarkraftwerke"). Zu diesem Zweck wurden in letzter Zeit verschiedene schwimmende Plattformen entwickelt, um die entsprechenden Anlagen zu tragen. Aufgrund der einfachen und leichtgewichtigen Bauweise bei gleichzeitig hoher Belastbarkeit wurden zuletzt insbesondere Plattformen entwickelt, die von einem Luftpolster getragen werden.

Die US 3.673.975 offenbart eine Schwimmplattform, umfassend ein Deckelement, mehrere voneinander getrennte, an der Unterseite des Deckelements ortsfest angebrachte, nach unten hin offene Auftriebskörper aus einem gasdichten, druck- und korrosionsbeständigen, flexiblen Material, die bei Kontakt mit einer Flüssigkeitsoberfläche jeweils einen geschlossenen Hohlraum mit dieser einschließen, sowie Drucklufterzeugungsvorrichtungen zur Herstellung eines Überdrucks in den einzelnen Hohlräumen.

Die WO 2009/001225 A2 beschreibt eine kreisrunde schwimmende Plattform mit einer äußeren Ringstruktur und einer flexiblen Abdeckung, die mit der Oberseite der äußeren Ringstruktur dicht abschließt und so einen Hohlraum definiert, der mittels eines Kompressors unter einen Überdruck gesetzt werden kann, um den notwendigen Auftrieb zu erzeugen. Die gesamte Plattform ist rotierbar, um sie der Position der Sonne entsprechend ausrichten zu können. Durch den Überdruck kann die Oberseite der Plattform zudem ausgebeult werden, um das Abfließen von Regenwasser zu erleichtern.

Obwohl diese Plattform sowohl als land- als auch als seetauglich bezeichnet wird, geht aus bevorzugten Ausführungsformen, in denen die Rotation mittels Rädern in einem die Plattform umgebenden Ring herbeigeführt wird, hervor, dass vor allem auf einen Einsatz an Land, d.h. in einem kreisrunden Becken schwimmend, abgezielt wird.

In der nach dem Prioritätstag der vorliegenden Anmeldung veröffentlichten österreichischen Patentanmeldung AT 509.639 A1 von Heliovis wird anstelle des obigen äußeren Rings ein nach unten offenes Abdichtelement in Form einer in das Wasser eintauchenden, die Plattform umlaufenden Wand eingesetzt, die unterhalb eines flächigen Deckelements der Plattform wiederum einen Hohlraum definiert, der mit Druckluft befüllt wird. Die Wand kann entweder eine flexible Kunststoffmembran oder ein starres Material, wie z.B. ein Blech, sein. Am unteren Rand kann die Wand mit Gewichten beschwert sein, um das Eintauchen zu gewährleisten.

Weiters können auch zwei solcher Wände parallel zueinander verlaufen und den Hohlraum in einen inneren Bereich und einen äußeren Kreisring teilen. Der äußere Kreisring kann durch radiale Zwischenwände in Segmente unterteilt sein. Alternativ dazu kann der Hohlraum als Ganzes mittels aufeinander normal stehender Zwischenwände in waben- oder schachbrettförmige Abschnitte unterteilt sein. Derartige Unterteilungen erhöhen die Sicherheit und ermöglichen die Einstellung unterschiedlicher Drücke in den einzelnen Abschnitten, z.B. um die Plattform zum Ablassen von Regenwasser verkippen zu können.

Der Hauptnachteil der Ausführungsformen nach dem Stand der Technik liegt darin, dass die jeweiligen Schwimmplattformen nur unzureichend gegen ein Verkippen aufgrund von Wellengang gesichert sind, was eine Verringerung des Wirkungsgrads eines darauf getragenen Solarkraftwerks verursacht.

Ziel der Erfindung war daher die Bereitstellung einer schwimmenden Plattform, die verbesserte Schwimmeigenschaften aufweist und vor allem besser gegen die Einflüsse von Wellengang und Wind gesichert ist.

### OFFENBARUNG DER ERFINDUNG

Dieses Ziel erreicht die Erfindung durch Bereitstellung einer Schwimmplattform, die Folgendes umfasst: ein Deckelement; zumindest drei voneinander getrennte, an der Unterseite des Deckelements ortsfest angebrachte, nach unten hin offene Auftriebskörper aus einem gasdichten, druck- und korrosionsbeständigen, flexiblen Material, die bei Kontakt mit einer Flüssigkeitsoberfläche jeweils einen geschlossenen Hohlraum mit dieser einschließen; und zumindest eine Drucklufterzeugungsvorrichtung zur Herstellung eines Überdrucks in den einzelnen Hohlräumen.

Durch das Vorsehen mehrerer voneinander getrennter druckluftbefüllbarer Auftriebskörper kann sich ein von heranrollenden Wellen oder vom Wind ausgeübter seitlicher Druck nicht von einem Auftriebskörper zum anderen fortpflanzen, wie dies bei einfachen Unterteilungen durch Zwischenwände der Fall ist. Darüber hinaus wirken die einzelnen Auftriebskörper einem Kippen der Plattform gemeinsam entgegen: Wird die Plattform durch eine äußere Last bzw. eine sonstige Störung des Gleichgewichts gekippt, müsste sich durch das mit dem Kippen verbundene Anheben auf einer Seite das Volumen des Hohlraums der dortigen Auftriebskörper erhöhen. Aufgrund der Gasdichtheit verringert sich jedoch der Luftdruck in diesem Hohlraum und wirkt so dem Anheben entgegen. Gleichzeitig wird beim Kippen wegen des Eintauchens der Auftriebskörper auf der gegenüberliegenden Seite in den dort befindichen Hohlräumen der Druck erhöht, was ebenfalls dem Kippen entgegenwirkt. Die sich unterschiedlich einstellenden Drücke in den verschiedenen Kammern sorgen somit für die Schwimmstabilität der Plattform. Auf diese Weise ist ein starkes Verkippen der erfindungsgemäßen Plattform selbst bei stärkerem Wellengang oder Wind kaum möglich. Und dies, obwohl ein weiterer großer Vorteil der Erfindung darin besteht, dass die gesamte Plattform aus leichtgewichtigen Bauteilen konstruierbar ist.

Ein gezieltes Kippen der Plattform, insbesondere zur Ausrichtung von darauf getragenen Sonnenkollektoren oder dergleichen je nach Sonnenstand, ist jedoch durch Einstellung unterschiedlicher Drücke in auf gegenüberliegenden Seiten der Plattform liegenden Auftriebskörpern sehr wohl möglich.

Das Material der Auftriebskörper ist nicht speziell eingeschränkt, und es können beispielsweise Kunststofffolien eingesetzt werden. Vorzugsweise werden Membranen aus faserverstärkten Kunststoffen eingesetzt, um neben der geforderten Flexibilität auch für ausreichende Druckbeständigkeit und Reißfestigkeit, aber gleichzeitig auch für eine eingeschränkte Dehnbarkeit im druckbeaufschlagten Zustand zu sorgen. So können etwa Folien auf PVC-, Polypropylen- oder ABS- (Acrylnitril/Butadien/StyrolCopolymer-) Basis eingesetzt werden. Bevorzugt werden dabei Meerwasser- und UV-beständige Kunststoffe, wie z.B. Ethylen-Tetrafluorethylen- (ETFE-) Copolymere, die allesamt auch entsprechende Stabilisatoren enthalten können.

Die Mindestanzahl drei der erfindungsgemäßen Auftriebskörper ergibt sich aus der oben beschriebenen Wirkung. Erst ab drei Auftriebskörpern, die zueinander versetzt, d.h. nicht in einer Linie angeordnet sind und vorzugsweise um einen Winkel von etwa 120° zueinander versetzt um den Schwerpunkt der Plattform angeordnet sind, kann sich die obige, aus potenziellen Unter- und Überdrücken in den Hohlkörpern entwickelnde Rückstellkraft gegen Verkippen entfalten. Allgemein formuliert sind aus diesem Grund in bevorzugten Ausführungsformen der vorliegenden Erfindung drei oder mehr Auftriebskörper symmetrisch um den Schwerpunkt der Plattform angeordnet. In manchen bevorzugten Ausführungsformen ist das Deckelement quadratisch, und es sind vier oder neun Auftriebskörper symmetrisch um dessen Mittelpunkt angeordnet. Oder es kann eine beliebige Anzahl größer 3 kreis-, kreuz- oder sternförmig um den Schwerpunkt angeordnet sein.

Das Verhältnis zwischen der Summe der Querschnittsflächen bzw. der Hohlraumvolumina der Auftriebskörper und der Fläche des Deckelements ist zwar nicht speziell eingeschränkt, solange das Volumen der von den Auftriebskörpern eingeschlossenen Hohlräume ausreicht, um der gesamten Schwimmplattform, samt der darauf getragenen Last, wie z.B. eines Solarkraftwerks, den erforderlichen Auftrieb zu verleihen. Vorzugsweise macht die Summe der Querschnittsflächen der Auftriebskörper jedoch zumindest die Hälfte der Fläche des Deckelements aus, um den Überdruck in den Auftriebskörpern zu begrenzen.

Bei einem eher kleinen Verhältnis zwischen der Summe der Querschnittsflächen der Auftriebskörper und der Fläche des Deckelements sind die Auftriebskörper vorzugsweise vorwiegend an den Rändern der Plattform angebracht, um ein Kippen zu verhindern.

Die vertikale Querschnittsform der Auftriebskörper ist nicht speziell eingeschränkt, solange sie nach unten offen sind und ein Austritt der eingefüllten Druckluft wirksam verhindert wird. Bevorzugt wird daher beispielsweise ein Querschnittsprofil, das im Wesentlichen einem auf den Kopf gestellten U entspricht, noch bevorzugter ein auf den Kopf gestelltes U-Profil, dessen Querschnitt sich nach unten hin verjüngt, wodurch die Formstabilität des Auftriebskörpers erhöht wird.

Das Deckelement ist nicht speziell eingeschränkt. Im Gegensatz zum Stand der Technik braucht es sich dabei nicht um ein flächiges Deckelement zu handeln, da dieses nicht die obere Begrenzung für den druckluftbefüllten Hohlraum darunter darstellt. Daher kann es sich bei dem Deckelement der Erfindung beispielsweise auch um eine Fachwerkstruktur handeln, was im Hinblick auf geringes Gewicht bevorzugt ist. Eine zumindest teilweise Fachwerkbauweise bietet neben dem verringerten Gewicht auch den Vorteil, dass Regen- oder Spritzwasser ungehindert abfließen kann. Bei flächigen Deckelementen kann dafür aber auch durch Vorsehen von entsprechenden Abflussöffnungen Sorge getragen werden.

Die Form des Deckelements ist ebenfalls nicht speziell eingeschränkt, wobei jedoch auf Gründen der Stabilisierung gegen Wellengang aus allen Richtungen eine symmetrische Form, wie z.B. Kreis oder Quadrat, bevorzugt wird.

Von der zumindest einen Drucklufterzeugungsvorrichtung, wobei es sich aus Sicherheitsgründen vorzugsweise um zumindest zwei Vorrichtungen, wie z.B. Kompressoren, handelt, erstrecken sich Rohr- oder Schlauchverbindungen in die Hohlräume der Auftriebskörper hinein, um diese mit Druckluft zu befüllen. Vorzugsweise münden diese Luftzuleitungen im Mittelpunkt des jeweiligen Auftriebskörpers von oben in diesen ein, um für eine gleichmäßige Befüllung der Auftriebskörper zu sorgen. Die Auftriebskörper können, wenn konstruktiv nicht anders möglich, über Überdruckventile verfügen, um Überdehnungen oder gar ein Platzen der Auftriebskörper bei etwaigen Fehlfunktionen der Kompressoren zu verhindern. Diese Überdruckventile, sofern vorhanden, sind vorzugsweise in einer solchen Höhe angebracht, dass sie im Normalbetrieb der Schwimmplattform über dem Wasserspiegel liegen. Aufgrund der Herstellungskosten sind Überdruckventile jedoch nicht bevorzugt.

Theoretisch kann zur Befüllung der Auftriebskörper auch ein anderes Gas als Luft, z.B. ein Edelgas, eingesetzt werden. Aus Kostengründen und im Hinblick auf die Verfügbarkeit im Off-Shore-Betrieb wird aber wohl Luft das Gas der Wahl sein.

Weiters sind in bevorzugten Ausführungsformen die unteren Ränder der Auftriebskörper in bekannter Weise mit Gewichten beschwert, um zu verhindern, dass sie durch äußere Einwirkung, sei es durch Wellengang, Treibgut oder auch größere Meeresbewohner, an die Oberfläche gehoben oder gedrückt werden, so dass die Luft aus dem Hohlraum entweichen kann.

Aus ähnlichen Überlegungen sind in bevorzugten Ausführungsformen der Erfindung die Auftriebskörper intern verspannt, um das Volumen der jeweiligen Hohlräume im Wesentlichen konstant zu halten. Zu diesem Zweck werden vorzugsweise gegenüberliegende Punkte der Innenwände über Streben, z.B. aus Aluminium oder Kunststoff, miteinander verbunden, beispielsweise 4 Punkte kreuzförmig bzw. 6 oder 8 Punkte sternförmig verbunden.

In besonders bevorzugten Ausführungsformen der erfindungsgemäßen Schwimmplattform sind an der Unterseite des Deckelements neben den Auftriebskörpern zusätzlich eine oder mehrere Spierentonnen oder ähnliche Elemente angebracht. Diese verstärken nicht nur den von den Auftriebskörpern erzeugten Auftrieb, sondern können in gewissem Ausmaß auch als Treibanker fungieren, indem sie einem Abdriften der Schwimmplattform entgegenwirken. Außerdem können solche Spierentonnen manche der Auftriebskörper ersetzen, solange die verbleibende Anzahl ausreicht, um den erforderlichen Auftrieb zu erzeugen.

Darüber hinaus können an der Unterseite des Deckelements zusätzlich auch ein oder mehrere geschlossene Schwimmkörper angebracht sein, z.B. luftgefüllte geschlossene Schwimmkörper oder Schwimmkörper aus einem Material mit geringer Dichte und hohem Eigenauftrieb, z.B. aus Kunststoffschaum. Diese dienen einerseits zur Sicherheit bei einem etwaigen Totalausfall der Kompressoren, anderseits vereinfachen sie den Transport und das Positionieren der Schwimmplattform vor Inbetriebnahme, d.h. bevor die Hohlräume der Auftriebskörper mit Druckluft befüllt werden.

Zur Stabilisierung der Plattform weisen diese geschlossenen Schwimmkörper vorzugsweise ein sich nach unten verjüngendes Querschnittsprofil auf. Zur Maximierung der Wirkung sind vorzugsweise ein oder mehrere solcher geschlossener Schwimmkörper innerhalb eines jeweiligen Auftriebskörpers und/oder um diesen herum vorgesehen, noch bevorzugter innerhalb jedes einzelnen Auftriebskörpers und/oder um diesen herum. Vorzugsweise ist in jedem Auftriebskörper zumindest ein geschlossener Schwimmkörper vorgesehen, und noch bevorzugter ist/sind zusätzlich zumindest ein kreisförmiger und/oder mehrere kreisringsegmentförmige geschlossene(r) Schwimmkörper um jeden Auftriebskörper herum vorgesehen.

Generell sind bei Vorhandensein von Spierentonnen bzw. geschlossenen Schwimmkörpern jeweils mehrere Spierentonnen bzw. mehrere geschlossene Schwimmkörper symmetrisch um den Schwerpunkt der Plattform angeordnet, was wiederum den besten Schutz gegen den Einfluss des Wellengangs bietet.

Die Dimensionen der erfindungsgemäßen Schwimmplattform sind nicht speziell eingeschränkt. In bevorzugten Ausführungsformen mit (rotations)symmetrischer Kreisform oder Quadratform kann das Deckelement beispielsweise einen Durchmesser bzw. eine Seitenlänge von einigen Metern bis hin zu mehreren hundert Metern aufweisen.

Schließlich ist die erfindungsgemäße Plattform vorzugsweise mit Antriebselementen versehen, um sie auf dem Wasser bewegen zu können, vor allem, um sie um eine vertikale Achse drehen zu können. Dies ist bei einer Verwendung für schwimmende Solarkraftwerke von großer Bedeutung, um auf der Plattform getragene Sonnenkollektoren je nach Einfallswinkel der Sonnenstrahlen ausrichten zu können. Diese Antriebslemente sind nicht speziell eingeschränkt, und es können beispielsweise beliebige Arten von Schiffsmotoren mit Schraubenantrieb eingesetzt werden. Im Hinblick auf die Verwendung der Plattform für Solarkraftwerke sind Elektromotoren bevorzugt, die mit einem Teil der gewonnenen Solarenergie betrieben werden können.

Die Schwimmplattform der vorliegenden Erfindung ist zwar nicht auf die Verwendung für Off-Shore-Solarkraftwerke beschränkt, sondern kann prinzipiell für beliebige Zwecke eingesetzt werden, beispielsweise als Landeplatz für Hubschrauber. Bevorzugt ist jedoch ihre Verwendung zum Tragen einer Anlage zur Gewinnung von Solarenergie, da hier die erfindungsgemäß besonders gute Stabilisierung der Plattform gegen Verkippen eine unmittelbare Verbesserung des Wirkungsgrads des Solarkraftwerks zur Folge hat.

### KURZBESCHREIBUNG DER ZEICHNUNGEN

Bevorzugte Ausführungsformen der Erfindung werden nachstehend unter Bezugnahme auf die beiliegenden Zeichnungen näher beschrieben, die Folgendes zeigen:
Fig. 1 ist eine schematische isometrische Ansicht einer Ausführungsform der erfindungsgemäßen Schwimmplattform von schräg unten.
Fig. 2 ist eine schematische vertikale Querschnittsansicht einer Ausführungsform eines Auftriebskörpers der erfindungsgemäßen Schwimmplattform.
Fig. 3 ist eine schematische Unteransicht eines Auftriebskörpers der erfindungsgemäßen Schwimmplattform.
Fig. 4 ist eine schematische vertikale Querschnittsansicht der Ausführungsform eines Auftriebskörpers aus Fig. 3.
Fig. 5 ist eine schematische Unteransicht einer Ausführungsform der erfindungsgemäßen Schwimmplattform unter Verwendung mehrerer Auftriebskörper aus Fig. 4.
Fig. 6 ist eine schematische vertikale Querschnittsansicht der Ausführungsform der erfindungsgemäßen Schwimmplattform aus Fig. 5.

### DETAILLIERTE BESCHREIBUNG DER ZEICHNUNGEN

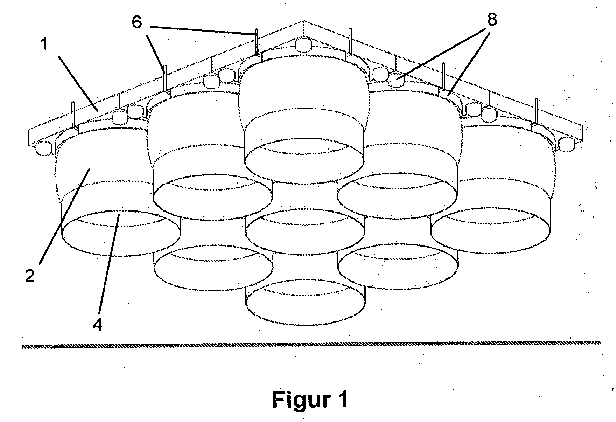

In Fig. 1 ist eine bevorzugte Ausführungsform der erfindungsgemäßen Schwimmplattform schematisch in isometrischer Ansicht von schräg unten dargestellt. Das Deckelement 1, hier flächig dargestellt, weist eine quadratische Form auf. An seiner Unterseite sind neun Auftriebskörper 2 symmetrisch um den Schwerpunkt des Quadrats (einer davon direkt im Schwerpunkt) angeordnet, deren Querschnittsflächen in Summe den größten Teil der Fläche des Deckelements 1 abdecken.

Jeder Auftriebskörper 2 besitzt (im druckluftbeaufschlagten Zustand) eine Querschnittsform, die im Wesentlichen einem umgekehrten U-Profil entspricht, dessen Querschnitt sich nach unten hin verjüngt und das zusammen mit der (hier nicht dargestellten) Wasseroberfläche einen Hohlraum 4 definiert. Bezugszeichen 6 markiert Luftansaugleitungen, die zu (hier nicht dargestellten) Pumpen und von diesen in die einzelnen Auftriebskörper führen. Neben den Auftriebskörpern und um diese herum sind zusätzliche geschlossene Schwimmkörper 8 vorgesehen. Letztere weisen jeweils die Form von Kreisringsegmenten auf, wie dies in nachstehend erläuterten Figuren noch besser zu erkennen ist.

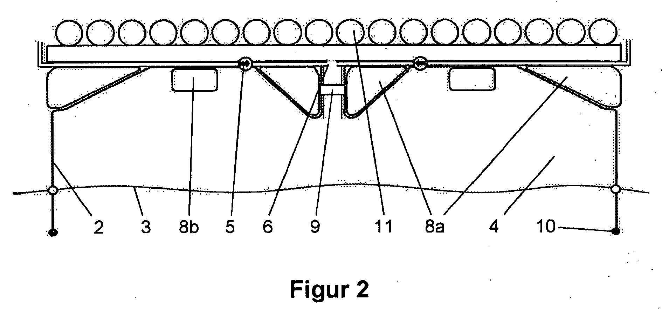

Fig. 2 ist eine schematische vertikale Querschnittsansicht einer Ausführungsform eines Auftriebskörpers der erfindungsgemäßen Plattform. Mit Bezugszeichen 2 ist hier erneut die Membranwand des Auftriebskörpers markiert, mit 3 die Wasseroberfläche und mit 4 erneut der Hohlraum darüber. Hier sind nun auch zwei Luftpumpen oder Kompressoren 5 dargestellt. Wie aus den weiteren Zeichnungen noch besser zu erkennen ist, wird jeder Auftriebskörper 2 in bevorzugten Ausführungsformen der Erfindung von mehreren Kompressoren 5 mit Luft versorgt, um etwaigen Fehlfunktionen vorzubeugen.

Die Luftzuleitung 6 mündet hier zentral in den Auftriebskörper 2 ein. Entweder in der Luftzuleitung 6 oder im Bereich des Dichtkörpers 9 zwischen Luftzuleitung und Auftriebskörper kann ein (nicht dargestelltes) Rückschlagventil vorgesehen sein. Der untere Rand des Auftriebskörpers 2 ist mit Gewichten 10 beschwert, um dessen Eintauchen zu gewährleisten. Mit Bezugszeichen 8 sind erneut geschlossene Schwimmkörper markiert, wobei hier mit 8a außerhalb, d.h. oberhalb, des Auftriebskörpers 2 liegende und mit 8b innerhalb desselben liegende geschlossene Schwimmkörper bezeichnet werden. Zuoberst ist schließlich beispielhaft eine Vielzahl von auf dem Deckelement aufliegenden röhrenförmigen Sonnenkollektoren 11 eingezeichnet.

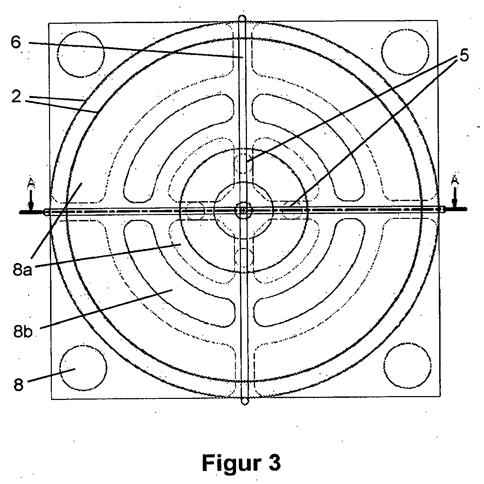

Fig. 3 ist eine schematische Unteransicht eines ähnlichen Auftriebskörpers wie in Fig. 2. Bezugszeichen 2 markiert erneut die Membranwand des Auftriebskörpers, wobei der innere der beiden konzentrischen Kreise die Verjüngung nach unten hin darstellt. Hier sind insgesamt vier Luftgebläse bzw. Kompressoren 5 zu erkennen, von denen der Auftriebskörper gespeist werden kann. Erneut sind außerhalb (d.h. oberhalb und daher in der vorliegenden Unteransicht strichliert gezeichnet) des Auftriebskörpers 2 liegende geschlossene Schwimmkörper mit 8a und innerhalb desselben liegende mit 8b gekennzeichnet. Insgesamt vier neben dem Auftriebskörper 2 liegende geschlossene Schwimmkörper sind einfach mit 8 markiert.

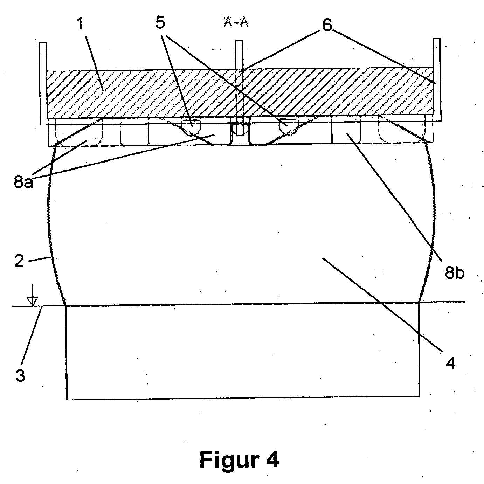

Fig. 4 ist eine schematische vertikale Querschnittsansicht des Auftriebskörpers aus Fig. 3 entlang der dortigen Linie A-A mit denselben Bauteilen und Bezugszeichen.

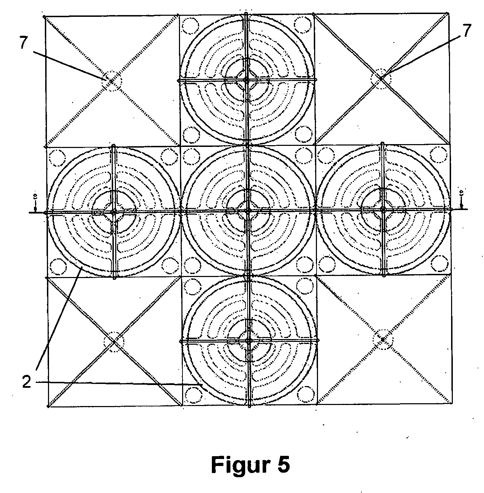

Fig. 5 ist eine schematische Unteransicht einer Ausführungsform der erfindungsgemäßen Schwimmplattform unter Verwendung mehrerer der in den Fig. 3 und 4 dargestellten Auftriebskörper. Genauer gesagt kann eine erfindungsgemäße Schwimmplattform auch in modularer Bauweise zusammengestellt werden, indem einzelne, mit Auftriebskörpern sowie gegebenenfalls mit geschlossenen Schwimmkörpern und/ oder Spierentonnen und dergleichen ausgestattete Abschnitte miteinander zu einer Gesamtplattform kombiniert werden. Dies ermöglicht eine Vereinfachung der Herstellung der erfindungsgemäßen Plattform, da nur wenige unterschiedliche Module gefertigt zu werden brauchen und diese dann gezielt, in Abhängigkeit vom geplantem Einsatzort und den dort herrschenden Meeres- und Windverhältnissen, zu der am besten geeigneten Plattform kombiniert werden können. Auch aus diesem Grund ist eine quadratische Form der erfindungsgemäßen Schwimmplattform bevorzugt.

Fig. 5 veranschaulicht eine solche modulare Bauweise, wobei fünf Module mit Auftriebskörpern 2 und geschlossenen Schwimmkörpern, wie in den Fig. 3 und 4 dargestellt, kreuzförmig miteinander verbunden und punktsymmetrisch um den Schwerpunkt angeordnet sind. In den Ecken der Plattform sind vier Module vorgesehen, die keine Auftriebskörper oder geschlossene Schwimmkörper aufweisen, sondern lediglich jeweils eine Spierentonne 7. Auch dieses Beispiel ist genau wie die anderen nur als Veranschaulichung der Erfindung und keineswegs als Einschränkung anzusehen. Beispielsweise können auch Spierentonnen innerhalb der Auftriebskörper vorgesehen sein usw.

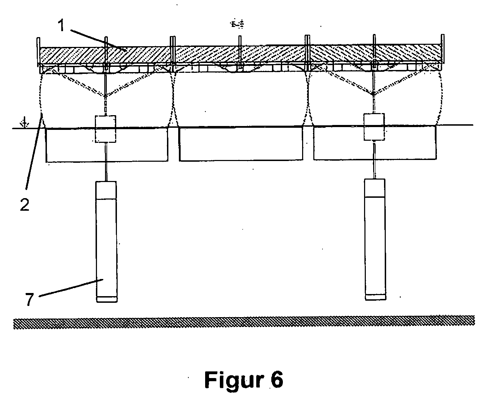

Fig. 6 ist schließlich eine schematische vertikale Querschnittsansicht der Ausführungsform der erfindungsgemäßen Schwimmplattform aus Fig. 5 entlang der dortigen Linie B-B.

Somit stellt die vorliegende Erfindung eine Schwimmplattform bereit, die im Vergleich zu ähnlichen Plattformen nach dem Stand der Technik weitaus besser gegen Kippen aufgrund der Einwirkung von Wind und Wellen stabilisiert ist und sich daher besonders gut als Plattform für Off-Shore-Solarkraftwerke eignet.

## Patentansprüche

1. Schwimmplattform, Folgendes umfassend:
a) ein Deckelement (1);
b) zumindest drei voneinander getrennte, an der Unterseite des Deckelements (1) ortsfest angebrachte, nach unten hin offene Auftriebskörper (2) aus einem gasdichten, druck- und korrosionsbeständigen, flexiblen Material, die bei Kontakt mit einer Flüssigkeitsoberfläche (3) jeweils einen geschlossenen Hohlraum (4) mit dieser einschließen; und
c) zumindest eine Drucklufterzeugungsvorrichtung (5) zur Herstellung eines Übenirucks in den einzelnen Hohlräumen (4);
**dadurch gekennzeichnet, dass**
i) die Auftriebskörper (2) jeweils einen kreisrunden horizontalen Querschnitt und ein vertikales Querschnittsprofil aufweisen, das im Wesentlichen einem auf den Kopf gestellten U entspricht; und
ii) die unteren Ränder der Auftriebskörper (2) mit Gewichten beschwert sind.

2. Schwimmpiattform nach Anspruch 1, **dadurch gekennzeichnet, dass** sich das im Wesentlichen einem auf den Kopf gestellten U entsprechende vertikale Querschnittsprofil der Auftriebskörper (2) nach unten hin verjüngt.

3. Schwimmplattform nach Anspruch 1 oder 2, **dadurch gekennzeichnet, dass** die Auftriebskörper (2) intern verspannt sind.

4. Schwimmplattform nach einem der Ansprüche 1 bis 3, **dadurch gekennzeichnet, dass** die Auftriebskörper (2) symmetrisch um den Mittelpunkt der Plattform angeordnet sind.

5. Schwimmplattform nach Anspruch 4, **dadurch gekennzeichnet, dass** die Plattform quadratisch ist und vier oder neun Auftriebskörper (2) symmetrisch um den Mittelpunkt der Plattform angeordnet sind.

6. Schwimmplattform nach einem der vorangegangenen Ansprüche, **dadurch gekennzeichnet, dass** eine Luftzuleitung (6) von der Drucklufterzeugungsvorrichtung (5) im Mittelpunkt des jeweiligen Auftriebskörpers (2) in diesen einmündet.

7. Schwimmplattform nach einem der vorangegangenen Ansprüche, **dadurch gekennzeichnet, dass** an der Unterseite des Deckelements (1) zusätzlich eine oder mehrere Spierentonnen (7) angebracht sind.

8. Schwimmplattform nach einem der vorangegangenen Ansprüche, **dadurch gekennzeichnet, dass** an der Unterseite des Deckelements (1) zusätzlich ein oder mehrere geschlossene Schwimmkörper (8) angebracht sind.

9. Schwimmplattform nach Anspruch 8, **dadurch gekennzeichnet, dass** die geschlossenen Schwimmkörper (8) ein sich nach unten und zum Rand der Plattform hin verjüngendes Querschnittsprofil aufweisen.

10. Schwimmplattform nach Anspruch 8 oder 9, **dadurch gekennzeichnet, dass** ein oder mehrere geschlossene Schwimmkörper (8) innerhalb eines jeweiligen Auftriebskörpers (2) und/oder um diesen herum vorgesehen sind.

11. Schwimmplattform nach einem der Ansprüche 7 bis 10, **dadurch gekennzeichnet, dass** mehrere Spierentonnen (7) und/oder mehrere geschlossene Schwimmkörper (8) symmetrisch um den Schwerpunkt der Plattform angeordnet sind.

12. Verwendung einer Schwimmplattform nach einem der Ansprüche 1 bis 11 zum Tragen einer Anlage zur Gewinnung von Solarenergie.

## Claims

1. A floating platform comprising:
a) a cover element (1);
b) at least three separate buoyant bodies (2) made of a gas-tight, pressure- and corrosion-resistant, flexible material, which buoyant bodies are open at the bottom and stationarily attached to the bottom of the cover element (1) and which, upon contact with the surface of a liquid (3), each enclose a closed hollow space (4) with said surface; and
c) at least one device for generating pressurized air (5) for generating an overpressure in the individual hollow spaces (4);
**characterised in that**
i) the buoyant bodies (2) each have a circular horizontal cross-section and a vertical cross-sectional profile which essentially corresponds to a U turned upside-down; and
ii) the lower edges of the buoyant bodies (2) are loaded with weights.

2. The floating platform according to claim 1, **characterised in that** the vertical cross-sectional profile of the buoyant bodies (2), which essentially corresponds to a U turned upside-down is tapered towards its lower end.

3. The floating platform according to claim 1 or claim 2, **characterised in that** the buoyant bodies (2) are internally braced.

4. The floating platform according to any one of the claims 1 to 3, **characterised in that** the buoyant bodies (2) are arranged symmetrically around the centre of the platform.

5. The floating platform according to claim 4, **characterised in that** the platform is square and four or nine buoyant bodies (2) are arranged symmetrically around the centre of the platform.

6. The floating platform according to any one of the preceding claims, **characterised in that** an air feed line (6) leads from the device for generating pressurized air (5) into each buoyant body (2) at its centre.

7. The floating platform according to any one of the preceding claims, **characterised in that**, additionally, one or more spar buoy/s (7) is/are attached to the lower side of the cover element (1).

8. The floating platform according to any one of the preceding claims, **characterised in that**, additionally, one or more closed floating body/ies (8) is/are attached to the bottom side of the cover element (1).

9. The floating platform according to claim 8, **characterised in that** the closed floating bodies (8) have a cross-sectional profile tapered downwards and towards the edge of the platform.

10. The floating platform according to claim 8 or 9, **characterised in that** one or more closed floating body/ies (8) is/are provided within and/or surrounding each buoyant body (2).

11. The floating platform according to any one of the claims 7 to 10, **characterised in that** several spar buoys (7) and/or several closed floating bodies (8) are arranged symmetrically around the center of gravity of the platform.

12. Use of the floating platform according to any one of the claims 1 to 11 for carrying a plant for generating solar energy.

## Revendications

1. Plateforme flottante comprenant:
a) un élément couvrant (1);
b) au moins trois corps portants (2) séparés d'un matériau flexible imperméable au gaz, résistant à la pression et corrosion qui sont ouverts au fond et fixés de manière stationnaire à la face inférieure du élément couvrant (1) et qui, en contact avec la surface (3) d'un liquide, enferment une cavité fermée (4) avec ladite surface ; et
c) au moins un générateur d'air comprimé (5) pour générer une pression excessive dans les cavités (4) individuelles ;
**caractérisée en ce que**
i) chacun des corps portants (2) a une section transversale horizontale circulaire et une section transversale verticale qui correspond sensiblement à un U retourné ; et
ii) les bords inférieurs des corps portants (2) sont chargés par des poids.

2. Plateforme flottante selon la revendication 1, **caractérisée en ce que** la section transversale verticale des corps portants (2), qui correspond sensiblement à un U retourné, s'amincit vers son extrémité inférieure.

3. Plateforme flottante selon la revendication 1 ou 2, claim 2, **caractérisée en ce que** les corps portants (2) sont internement haubanés.

4. Plateforme flottante selon une des revendications 1 à 3, **caractérisée en ce que** les corps portants (2) sont arrangés de manière symétrique autour du centre de la plateforme.

5. Plateforme flottante selon la revendication 4, **caractérisée en ce que** la plateforme est carrée et quatre ou neuf corps portants (2) arrangés de manière symétrique autour du centre de la plateforme.

6. Plateforme flottante selon une des revendications précédentes, **caractérisée en ce qu'**une conduite d'air (6) du générateur d'air comprimé (5) entre dans chaque corps portant (2) à son centre.

7. Plateforme flottante selon une des revendications précédentes, **caractérisée en ce qu'**une ou plusieurs bouées (7) supplémentaire/s est/sont fixée/s à la face inférieure de l'élément couvrant (1).

8. Plateforme flottante selon une des revendications précédentes, **caractérisée en ce que** un ou plusieurs corps portant/s fermé/s (8) supplémentaire/s est/sont fixé/s à la face inférieure de l'élément couvrant (1).

9. Plateforme flottante selon la revendication 8, **caractérisée en ce que** les corps portant fermés (8) ont une section transversale qui s'amincit vers leurs face inférieure et le bord de la plateforme.

10. Plateforme flottante selon la revendication 8 ou 9, **caractérisée en ce que** un ou plusieurs corps portant/s fermé/s (8) est/sont prévu/s dans et/ou autour de chaque corps portant (2).

11. Plateforme flottante selon une des revendications 7 à 10, **caractérisée en ce que** plusieurs bouées (7) et/ou plusieurs corps portants fermés (8) sont arrangés de manière symétrique autour du centre de la plateforme.

12. Utilisation d'une plateforme flottante selon l'une des revendications 1 à 11 pour supporter une installation pour la génération d'énergie solaire.
